# EUROPEAN PATENT APPLICATION

(11) **EP 4 797 803 A1**
(43) Date of publication of application: **26.08.2026**
(21) Application number: 24881082.2
(22) Date of filing: 02.07.2024
(51) Int. Cl.: H04W 48/08

(54) **SYSTEM MESSAGE SENDING METHOD AND APPARATUS, SYSTEM MESSAGE RECEIVING METHOD AND APPARATUS, AND STORAGE MEDIUM**

(30) Priority: 24.10.2023 CN 202311387676
(71) Applicant: ZTE CORPORATION, Shenzhen, Guangdong 518057 (CN)
(72) Inventor: LU, Zhaohua, Shenzhen, Guangdong 518057 (CN); LIU, Kun, Shenzhen, Guangdong 518057 (CN)
(74) Representative: Ziebig Hengelhaupt Intellectual Property Attorneys Patentanwaltskanzlei PartGmbB
(86) International application number: PCT/CN2024/103045
(87) International publication number: WO 2025/086707

(57) **Abstract**

The present disclosure relates to the technical field of communications. Provided are a system message sending method and apparatus, a system message receiving method and apparatus, and a storage medium. The system message sending method comprises: a first node sending at least one system message, wherein the system message is processed by at least one of the following: a first processing method and a second processing method; and the system message is at least one of the following: a first-type system message and a second-type system message.

## Description

### CROSS-REFERENCE TO RELATED APPLICATION(S)

This application claims priority to Chinese Patent Application No. 202311387676.6, filed with the China National Intellectual Property Administration on October 24, 2023, entitled "SYSTEM MESSAGE SENDING METHOD AND APPARATUS, SYSTEM MESSAGE RECEIVING METHOD AND APPARATUS, AND STORAGE MEDIUM", which is incorporated herein by reference in its entirety.

### TECHNICAL FIELD

The present disclosure relates to the field of communication technologies, and in particular, to a system message sending method and device, a system message receiving method and device, and a storage medium.

### BACKGROUND

In the 5th generation mobile communication system (5G) new radio (NR), a base station sends a master information block (MIB) through a physical broadcast channel (PBCH) in a synchronization signal/physical broadcast channel block (SS/PBCH block), and then uses a physical downlink shared channel (PDSCH) to carry a system information block (SIB). The SIB may be divided into a plurality of blocks, and the plurality of blocks carry different system messages.

In typical application scenarios of the 6th generation mobile communication system (6G), represented by smart cities, smart transportation, and smart homes, there are a large number of intelligent automated devices with highly differentiated capabilities, imposing increasingly stringent communication requirements for ultra-low latency, ultra-high reliability, ultra-wide bandwidth, and massive access. Applications of intelligent automation types also put forward high precision and high resolution requirements on sensing capabilities. In other words, types of terminals accessing the system will become extremely diverse in the 6G era. Continuing to use the MIB and SIB in NR to broadcast system messages will severely impact system spectrum utilization efficiency and increase the burden on the terminals. Different types of terminals have vastly different requirements for the level of detail and frequency of system messages, and the rapid increase in the number of wireless communication and sensing devices makes the contradiction between the endless growth of service demands and the limited wireless resources and computing power increasingly prominent. Therefore, there is an urgent need for a system message sending method and a system message receiving method to improve the system spectrum utilization efficiency.

### SUMMARY

In an aspect, a system message sending method is provided and applied to a first node. The method includes: sending at least one system message. A processing mode adopted for the system message includes at least one of a first processing mode and a second processing mode. The system message includes at least one of a first-type system message and a second-type system message.

In another aspect, a system message receiving method is provided and applied to a second node. The method includes: receiving at least one system message. A processing mode adopted for the system message includes at least one of a first processing mode and a second processing mode. The system message includes at least one of a first-type system message and a second-type system message.

In yet another aspect, a system message sending device is provided and applied to a first node. The device includes: a sending module configured to send at least one system message. A processing mode adopted for the system message includes at least one of a first processing mode and a second processing mode. The system message includes at least one of a first-type system message and a second-type system message.

In yet another aspect, a system message receiving device is provided and applied to a second node. The device includes: a receiving module configured to receive at least one system message. A processing mode adopted for the system message includes at least one of a first processing mode and a second processing mode. The system message includes at least one of a first-type system message and a second-type system message.

In yet another aspect, a communication device is provided. The communication device includes: a memory and a processor. The memory is coupled to the processor. The memory is configured to store computer program instructions executable by the processor. The processor, upon executing the computer program instructions, performs the system message sending method and the system message receiving method in any embodiment described above.

In yet another aspect, a computer-readable storage medium is provided. The computer-readable storage medium has stored computer program instructions. When the computer program instructions are run on a computer (e.g., a communication device or a signal transmission device), perform the system message sending method and the system message receiving method in any embodiment described above.

In yet another aspect, a computer program product is provided. The computer program product includes computer program instructions. The computer program instructions upon being executed, perform the system message sending method and the system message receiving method in any embodiment described above.

### BRIEF DESCRIPTION OF THE DRAWINGS

FIG. 1 is a schematic diagram showing an architecture of a communication system provided in embodiments of the present disclosure;
FIG. 2 is an interaction flowchart of a system message sending method and a system message receiving method provided in embodiments of the present disclosure;
FIG. 3 is a schematic diagram of a system message processing mode provided in embodiments of the present disclosure;
FIG. 4 is a schematic diagram of another system message processing mode provided in embodiments of the present disclosure;
FIG. 5 is a schematic diagram of yet another system message processing mode provided in embodiments of the present disclosure;
FIG. 6 is a schematic diagram of yet another system message processing mode provided in embodiments of the present disclosure;
FIG. 7 is a schematic diagram showing a structure of a system message sending device provided in embodiments of the present disclosure;
FIG. 8 is a schematic diagram showing a structure of a system message receiving device provided in embodiments of the present disclosure; and
FIG. 9 is a schematic diagram showing a structure of a communication device provided in embodiments of the present disclosure.

### DETAILED DESCRIPTION

The technical solutions in the embodiments of the present disclosure will be clearly and completely described below with reference to the accompanying drawings in the embodiments of the present disclosure. However, the described embodiments are merely some, but not all, embodiments of the present disclosure. All other embodiments obtained based on the embodiments of the present disclosure by those of ordinary skill in the art without paying any creative effort will fall within the protection scope of the present disclosure.

In the description of the present disclosure, unless otherwise specified, the symbol "/" means "or", for example, "A/B" may mean A or B. Herein, "and/or" is merely an associated relationship for describing associated objects, which means that there may be three relationships. For example, A and/or B may mean: only A, A and B at the same time, and only B. In addition, the term such as "at least one" means one or more, and the term such as "a/the plurality of" means two or more. Terms such as "first" and "second" do not limit a number or an execution order, and do not necessarily indicate that the objects defined by the terms are different.

It will be noted that, in the present disclosure, the term such as "exemplary" or "for example" is used to represent examples, illustrations, or explanations. Any embodiment or design scheme described with "exemplary" or "for example" in the present disclosure is not necessarily to be construed as preferred or advantageous over other embodiments or design schemes. Rather, the use of the term such as "exemplary" or "for example" is intended to present related concepts in a specific manner.

Large-scale commercialization of 5G NR is accelerating transformation of economy and society towards digitalization, networking, and intelligence, propelling networks into a new era of Internet of Everything. Rapidly emerging application demands in fields such as smart cities, smart transportation, and smart industrial production, have continuously strengthened development trends of differentiated network equipment capabilities, diversified network functions, and intelligent network management and control, further promoting the advent of the 6G era with intelligent connection of everything. In 5G NR systems, an MIB in system information is sent through a PBCH in an SS/PBCH block, and then an SIB is carried on a PDSCH. The SIB may be divided into a plurality of blocks, and the plurality of blocks carry different system information.

In typical 6G application scenarios represented by smart cities, smart transportation, and smart homes, there are a large number of intelligent automated devices with highly differentiated capabilities, imposing increasingly stringent communication requirements for ultra-low latency, ultra-high reliability, ultra-wide bandwidth, and massive access. Applications of intelligent automation types also put forward high precision and high resolution requirements on sensing capabilities. In other words, types of terminals accessing the system will become extremely diverse in the 6G era. Continuing to use the MIB and SIB in NR to broadcast system information will severely impact system spectrum utilization efficiency and increase the burden on the terminals. Different types of terminals have vastly different requirements for the level of detail and frequency of system information, and the rapid increase in the number of wireless communication and sensing devices makes the contradiction between the endless growth of service demands and limited wireless resources and computing power increasingly prominent.

In another aspect, the realization of the 6G vision requires a closed-loop information flow processing that includes acquisition of environmental sensing information, information interaction and sharing, intelligent information processing, layer-by-layer distribution of control information (including control information for communication networks and control commands for application execution devices). The traditional wireless network architectures and related art have become difficult to meet the continuously emerging application demands of the 5G and Beyond (B5G) or 6G era. There is an urgent need to develop new network architectures and enabling technologies that efficiently utilize resources and intelligently adapt to differentiated applications.

The rise of artificial intelligence (AI) technologies, represented by deep learning, reinforcement learning, and distributed learning, has a wide and profound impact on a variety of fields such as communication network optimization, intelligent sensing, and control applications, and greatly promotes the possibility of deep integration across communication, sensing, and computing. On this basis, if 6G achieves the integration and symbiosis of communication and sensing capabilities with the empowerment of intelligent computing technologies, 6G networks will be endowed with the capability to intelligently perceive the physical world and mirror and map the digital world at all times and everywhere. The massive number of new intelligent terminals connected will rely on continuously enhanced computing power for learning, communication, cooperation, and competition, so as to achieve self-learning, self-operation, and self-maintenance of the network, thereby achieving the vision of an integrated communication, sensing, and computing network of 6G.

In view of this, a system message sending method and a system message receiving method are provided in the present disclosure. A first node sends at least one system message. A processing mode adopted for the system message includes at least one of a first processing mode and a second processing mode. The system message includes at least one of a first-type system message and a second-type system message. This improves a system message transmission strategy, meets the requirements of different terminals and application scenarios, and may help dynamically adjust the system message transmission mode to adapt to different scenarios, thereby enhancing system compatibility and flexibility, improving system spectrum utilization efficiency and reducing resource overhead.

The system message sending method and system message receiving method provided in the embodiments of the present disclosure may be applied to systems in a variety of communication standards. For example, the systems to which the system message sending method and system message receiving method provided in the embodiments of the present disclosure are applicable include, but are not limited to, long term evolution (LTE) systems, a variety of versions based on LTE-advanced, 5G systems or other communication systems. In addition, the system message sending method and system message receiving method provided in the embodiments of the present disclosure may further be applicable to future-oriented communication systems (e.g., 6G communication systems).

A network architecture of a mobile communication network (including but not limited to 3G, 4G, 5G, and future mobile communication networks) in the embodiments of the present disclosure may include at least one first communication node and at least one second communication node. It will be understood that, in this example, in a downlink, the first communication node may be a network-side device (e.g., including but not limited to a base station), and the second communication node may be a terminal-side device (e.g., including but not limited to a terminal). Of course, in an uplink, the first communication node may also be a terminal-side device, and the second communication node may also be a network-side device. In a case where two communication nodes are in a device-to-device communication, both the first communication node and the second communication node may be base stations or terminals. The first communication node and the second communication node may be referred to as a first node and a second node for short, respectively.

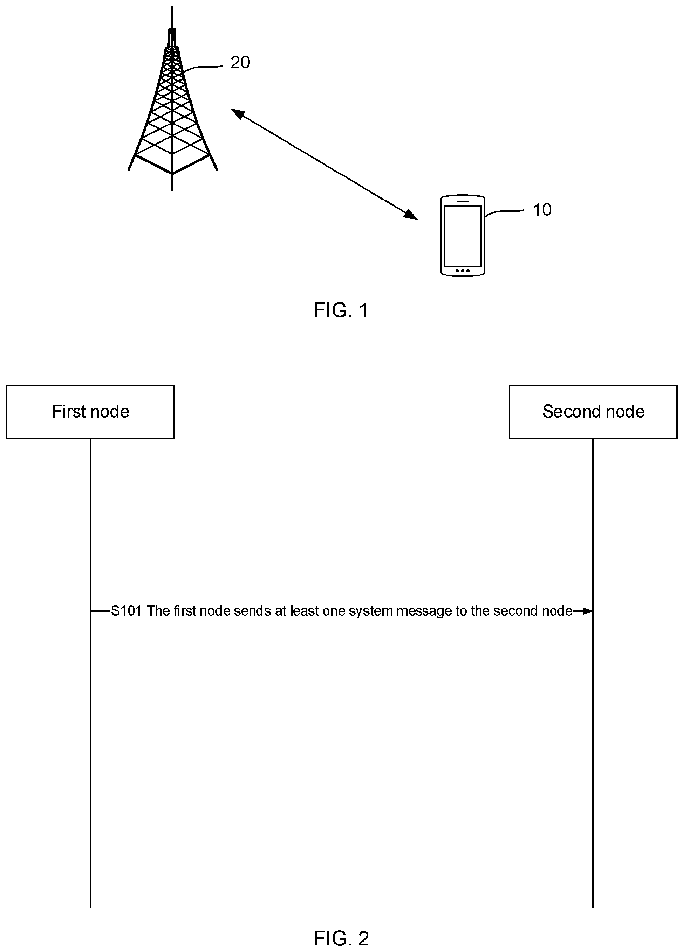

For example, in an example where the first communication node is a base station and the second communication node is a terminal, as shown in FIG. 1, a communication system is provided in the embodiment of the present disclosure. The communication system includes a terminal 10 and a base station 20. There may be one or more terminals 10 and base stations 20, and the numbers of the terminals and the base stations are not limited.

In some embodiments, the base station 20 provides a wireless access service for the terminal 10. A base station 20 provides at least one service coverage area (also referred to as a cell). A terminal 10 entering this area may communicate with the base station 20 through wireless signals, to receive the wireless access service provided by the base station 20.

In some embodiments, the base station may be a base station or an evolutional node B (eNB or eNodeB) in long term evolution (LTE) or long term evolution advanced (LTE-A), a base station device in a 5G network, or a base station in a future communication system. The base station may include a variety of network-side devices such as a variety of macro base stations, micro base stations, home base stations, wireless remote devices, reconfigurable intelligent surfaces (RISs), routers, relays, transmission and reception points (TRPs), and wireless fidelity (Wi-Fi) devices.

In some embodiments, the terminal may be a device having wireless transceiving functions. The terminal may be a mobile phone, a pad, a computer with wireless transceiving functions, a virtual reality (VR) terminal, an augmented reality (AR) terminal, a wireless terminal in industrial control, a wireless terminal in self driving, a wireless terminal in a remote medical system, a wireless terminal in a smart grid, a wireless terminal in transportation safety, a wireless terminal in a smart city, a wireless terminal in a smart home, etc. The embodiments of the present disclosure do not limit the application scenarios. The terminal may sometimes also be referred to as a user, user equipment (UE), an access terminal, a UE unit, a UE station, a mobile station, a mobile platform, a remote station, a remote terminal, a mobile device, a UE terminal, a wireless communication device, a UE agent, or a UE device, etc., and the embodiments of the present disclosure are not limited thereto.

The embodiments of the present disclosure do not limit the application scenarios. The system architectures and service scenarios described in the embodiments of the present disclosure are intended to more clearly explain the technical solutions in the embodiments of the present disclosure and do not constitute a limitation on the technical solutions provided in the embodiments of the present disclosure. Those of ordinary skill in the art will know that, as network architectures evolve and new service scenarios emerge, the technical solutions provided in the embodiments of the present disclosure are also applicable to similar technical problems.

A system message sending method and a system message receiving method are provided in the embodiments of the present disclosure. As shown in FIG. 2, the methods include the following step.

In S101, a first node sends at least one system message to a second node.

Correspondingly, the second node receives the at least one system message sent by the first node.

A processing mode adopted for the system message includes at least one of a first processing mode and a second processing mode. The system message includes at least one of a first-type system message and a second-type system message. The first-type system message may be a master information block (MIB), and the second-type system message may be a system information block (SIB).

The MIB is a primary information block of a system and generally broadcast periodically by the first node to all second nodes. The MIB includes basic system configuration information, such as system bandwidth, a frame structure. The second node may obtain key system parameters by parsing the MIB, so that the second node may correctly access the system.

The SIB is a block carrying additional system information. Compared to the MIB, the SIB includes more detailed system information, such as cell parameters, neighbor cell information, system broadcast messages. Information included in the SIB is relatively fixed but may change over time, so the second node needs to periodically acquire the latest SIB information.

In some embodiments, the system message includes at least one first-type system message, and information carried in each first-type system message is independently configured or different.

In some embodiments, the system message includes at least one second-type system message, and information carried in each second-type system message is independently configured or different.

In some embodiments, the first processing mode is a configurable processing mode, and the second processing mode is a processing mode determined by at least one of the first node and the second node.

The configurable processing mode may include one or more configurable processing modes. In a case where there are a plurality of configurable processing modes, the configurable processing mode to be used may be indicated by indication information or determined by means of condition triggering. Similarly, the processing mode determined by at least one of the first node and the second node may further include one or more processing modes.

In some embodiments, the processing mode includes at least one of: a message generation mode, a message sending mode, a message receiving mode, a format of information carried in a message, content of information carried in a message, and a transmission configuration. The message herein may also refer to signaling or a channel. The message includes a system message, a broadcast message, a message for the second node, a message for a group of second nodes, etc.

In some embodiments, the processing mode may further include a resource configuration mode and a scheduling mode corresponding to the message.

The message generation mode refers to a method or algorithm for generating the message, which may involve technologies such as protocol specifications, coding schemes, modulation and demodulation.

The message sending mode refers to a method by which the message is sent from a sending end to a receiving end, including transmitting antenna configuration, such as single-antenna transmission, multi-antenna transmission.

The message receiving mode refers to a method for receiving messages at the receiving end, including receiving antenna configuration, such as single-antenna reception, multi-antenna reception.

The format of information carried in the message refers to a structure and format of specific information carried in the message. The specific format depends on specifications and design of communication protocols. Different formats of information carried in the message correspond to different functions or application scenarios of information carried in the message.

The content of information carried in the message refers to specific information content carried in the message, including system configuration information, broadcast messages, signaling messages, etc. The specific content depends on different systems and applications.

The transmission configuration refers to relevant configurations during message transmission. A transmission configuration set includes at least one transmission configuration, and a transmission configuration includes at least the following configuration information: a time-domain resource and/or a frequency-domain resource. It will be understood that the transmission configuration may also be referred to as a sending configuration or resource configuration, which is not specifically limited in the present disclosure.

In some embodiments, a transmission configuration corresponds to a sending mode and/or receiving mode. Configuration information in the transmission configuration is configuration information required to support the sending mode and/or receiving mode.

In some embodiments, the transmission configuration further includes at least one of the following configuration information: a reference signal resource, a Discrete Fourier Transform (DFT) vector, a signal multiplexing mode, a transmitting end spatial filter, transmitting end coding, a codeword of transmitting end coding, a transmitting end antenna port, a transmitting end antenna weight vector, a transmitting end antenna weight matrix, a receiving end spatial filter, a receiving end coding, a codeword of a receiving end coding, a receiving end antenna port, a receiving end antenna weight vector, a receiving end antenna weight matrix, an angle of departure (AOD), a zenith angle of departure (ZOD), an angle of arrival (AOA), a zenith angle of arrival (ZOA), a vector or vector index constructed from at least one of AOA, AOD, ZOD, or ZOA, and a codeword in a codebook. The reference signal resource includes at least one of a time-domain resource, a frequency-domain resource, a code-domain resource, and port information of a reference signal. The reference signal includes a sounding reference signal (SRS). The signal multiplexing mode includes at least one of: space division multiplexing, time division multiplexing, and frequency division multiplexing.

In some embodiments, the transmission configuration further includes at least one of the following configuration information: a sending beam, a sending beam group, a sending beam index information, a sending beam group index, a sending beam pair, a sending beam number information, a sending beam direction information, a receiving beam, a receiving beam group, a receiving beam index information, a receiving beam group index, a receiving beam pair, a receiving beam index information, a receiving beam number information, or a receiving beam direction information.

In some embodiments, the transmission configuration further includes at least one of the following configuration information: a spatial filter, a spatial receiving parameter, or a spatial sending parameter. The spatial filter may be at least one of: a DFT vector, a precoding vector, a DFT matrix, a precoding matrix, a vector formed by a linear combination of a plurality of DFTs, or a vector formed by a linear combination of a plurality of precoding vectors.

It will be understood that the content included in the transmission configuration described above is merely an example. As practical requirements change and network architectures evolve, the transmission configuration may further include other possible content, which is not specifically limited in the embodiments of the present disclosure.

In some embodiments, the first node and/or the second node further determines the second processing mode of the message based on a first reference information set. The first reference information set includes at least one of: configuration information of a downlink reference signal/channel, configuration information of an uplink reference signal/channel, configuration information of a downlink signal/channel, configuration information of an uplink signal/channel, measurement or detection information of a downlink reference signal/channel, measurement or detection information of an uplink reference signal/channel, measurement or detection information of an uplink signal/channel, and measurement or detection information of a downlink signal/channel.

In some embodiments, the first node and/or the second node further determines the second processing mode of the message through a first functional module. The first functional module may also be referred to as a learning module, an artificial intelligence module, a configuration estimation module, or a resource allocation module, etc., which is not specifically limited in the embodiments of the present disclosure. As an example, output information of the first functional module may include one or more second processing modes of the message. In a case where the output information of the first functional module includes a plurality of second processing modes of the message, a second processing mode is selected as the second processing mode of the message.

In some embodiments, the artificial intelligence includes a device, a component, software, and a module with self-learning capabilities such as machine learning (ML), deep learning, reinforcement learning, transfer learning, deep reinforcement learning, meta-learning.

In some embodiments, the artificial intelligence is implemented by an artificial intelligence network (or referred to as a neural network). The neural network includes multiple layers, each layer includes at least one node. In an example, the neural network includes an input layer, an output layer, and at least one hidden layer. Each layer of the neural network uses a layer including, but is not limited to, at least one of a fully connected layer, a dense layer, a convolutional layer, a transposed convolutional layer, a direct connection layer, an activation function, a normalization layer, and a pooling layer.

In some embodiments, each layer of the neural network may include a sub-neural network, such as a residual network block (or referred to as a resnet block), a densenet block, a recurrent neural network (RNN). The artificial intelligence network includes a neural network model and/or neural network parameters corresponding to the neural network model. The neural network model may be referred to as a network model for short, and the neural network parameters may be referred to as network parameters for short. A network model defines a network architecture, such as the number of layers of the neural network, a size of each layer, an activation function, a connection situation, a size of a convolution kernel and a convolution stride, a convolution type (e.g., 1D convolution, 2D convolution, 3D convolution, dilated convolution, transposed convolution, separable convolution, grouped convolution, expanded convolution), while the network parameters are weights and/or biases of each layer in the network model and their values. A network model may correspond to multiple sets of different neural network parameter values, so as to adapt to different scenarios. The values of the network parameters may be obtained through offline training and/or online training. A neural network model may correspond to multiple different neural network parameter values.

In some embodiments, a processing mode of a message in a first message set is determined according to the first-type system message. The first message set includes at least one of:
the second-type system message;
a message carrying scheduling information of the second-type system message;
a control channel;
a downlink channel;
an uplink channel; and
a message related to a random access procedure.

The scheduling information of the second-type system message includes at least: resource configuration information of the second-type system message. The scheduling information is carried on a physical downlink control channel (PDCCH). A message carrying scheduling information of at least one second-type system message other than the second-type system message may further refer to signaling or a channel of carrying scheduling information of at least one second-type system message other than the second-type system message. The message related to the random access procedure may further refer to signaling or a channel related to the random access procedure.

The control channel includes a physical downlink control channel.

The downlink channel includes a physical downlink shared channel. The downlink channel may further have other names, such as a downlink data transmission channel.

The uplink channel includes a physical uplink shared channel. The uplink channel may further have other names, such as an uplink data transmission channel.

The random access procedure includes transmission or reception of a plurality of messages between the first node and the second node. These messages include at least one of the following functions:
achieving uplink synchronization between the first node and the second node;
achieving a transition from a radio resource control (RRC) idle state to an RRC connected state;
mobility management of the second node in the RRC connected state, such as achieving uplink synchronization with a neighbor cell during handover;
in response to the first node detecting that the second node is out of synchronization in the uplink, achieving uplink resynchronization by triggering the second node through a downlink command;
in response to the second node detecting downlink synchronization failure, achieving resynchronization through uplink random access;
in response to the number of untimely scheduling events of the second node in the connected state exceeding a certain threshold, initiating random access to compete for resources;
acquiring system information (SI); and
synchronization recovery after beam failure.

In some embodiments, the processing mode of the message in the first message set being determined according to the first-type system message includes that: the processing mode of the message in the first message set is the same as the processing mode of the first-type system message; alternatively, the processing mode of the message in the first message set is indicated by the first-type system message. In this way, message processing efficiency is improved and resources may also be saved by determining the processing mode of the message in the first message set according to the first-type system message.

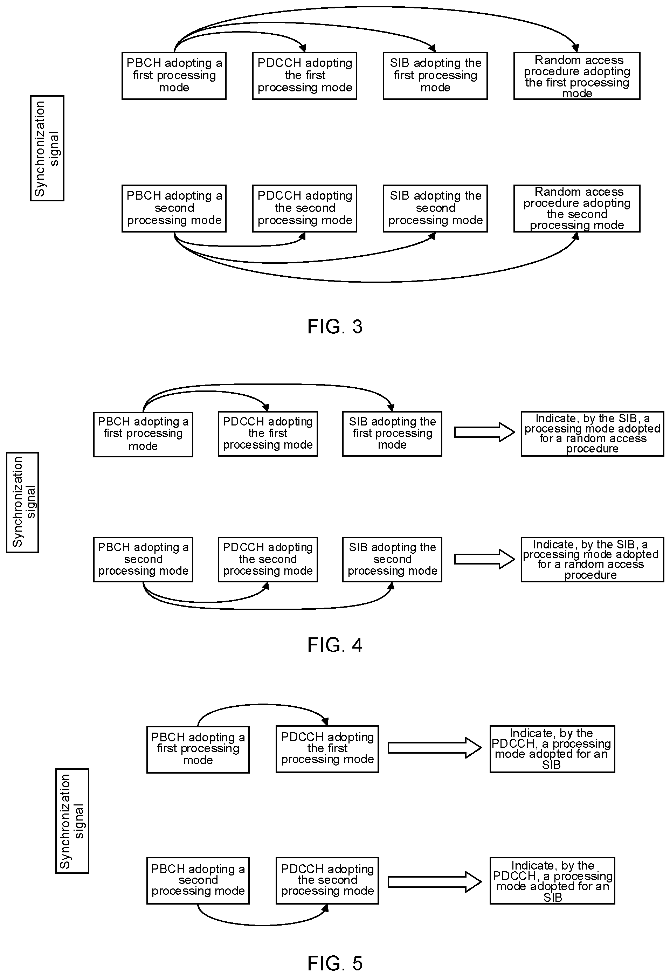

For example, as shown in FIG. 3, in a communication system, a synchronization signal is sent through a downlink channel for time and/or synchronization of downlink signals of the system. The PBCH carries MIB information, and the MIB carries key information for receiving an SIB1. For example, the key information for receiving the SIB1 includes a system frame number (SFN), subcarrier spacing, resource configuration of a PDCCH carrying scheduling information of the SIB1, and configuration information of a demodulation reference signal (DMRS). Information carried in the SIB1 includes: cell selection, cell access, scheduling information of other SIBs, etc.

In a case where the PBCH adopts the first processing mode, the PDCCH carrying scheduling information of the SIB1, the SIB, and messages involved in subsequent random access procedures also adopt the first processing mode.

In a case where the PBCH adopts the second processing mode, the PDCCH carrying scheduling information of the SIB1, the SIB, and messages involved in subsequent random access procedures also adopt the second processing mode.

For another example, as shown in FIG. 4, in a communication system, a synchronization signal is sent through a downlink channel for time and/or synchronization of downlink signals of the system. The PBCH carries MIB information, and the MIB carries key information for receiving an SIB1. For example, the key information for receiving the SIB1 includes an SFN, subcarrier spacing, resource configuration of a PDCCH carrying scheduling information of the SIB1, and configuration information of a DMRS. In this embodiment, information carried in the SIB1 includes: cell selection, cell access, scheduling information of other SIBs, etc.

In a case where the PBCH adopts the first processing mode, the PDCCH carrying scheduling information of the SIB1 and the SIB also adopt the first processing mode.

In a case where the PBCH adopts the second processing mode, the PDCCH carrying scheduling information of the SIB1 and the SIB also adopt the second processing mode.

In this example, messages involved in subsequent random access procedures adopt a processing mode indicated by the SIB.

For yet another example, as shown in FIG. 5, in a communication system, a synchronization signal is sent through a downlink channel for time and/or synchronization of downlink signals of the system. The PBCH carries MIB information, and the MIB carries key information for receiving an SIB1. For example, the key information for receiving the SIB1 includes an SFN, subcarrier spacing, resource configuration of a PDCCH carrying scheduling information of the SIB1, and configuration information of a DMRS. In this embodiment, information carried in the SIB1 includes: cell selection, cell access, scheduling information of other SIBs, etc.

In a case where the PBCH adopts the first processing mode, the PDCCH carrying scheduling information of the SIB1 also adopts the first processing mode.

In a case where the PBCH adopts the second processing mode, the PDCCH carrying scheduling information of the SIB1 also adopts the second processing mode.

In this example, the SIB adopts a processing mode indicated by the PDCCH.

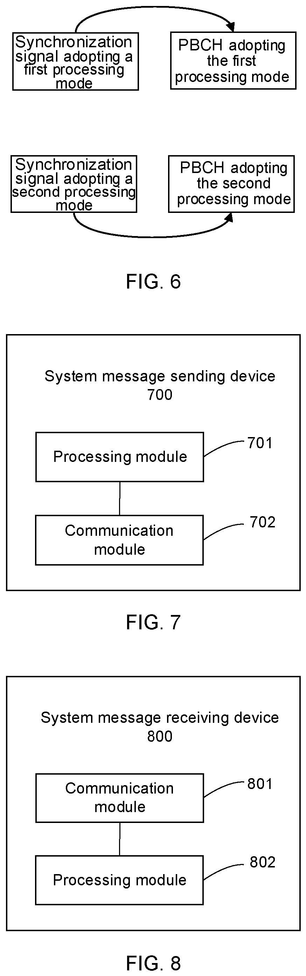

For yet another example, as shown in FIG. 6, in a communication system, a synchronization signal is sent through a downlink channel for time and/or synchronization of downlink signals of the system. The PBCH carries MIB information, and the MIB carries key information for receiving an SIB1. For example, the key information for receiving the SIB1 includes an SFN, subcarrier spacing, resource configuration of a PDCCH carrying scheduling information of the SIB1, and configuration information of a DMRS.

In a case where the synchronization signal adopts the first processing mode, the PBCH also adopts the first processing mode.

In a case where the synchronization signal adopts the second processing mode, the PBCH also adopts the second processing mode.

In some embodiments, the same message in the first message set corresponds to at least one processing mode.

In some embodiments, the same message in the first message set corresponds to at least one first processing mode; and/or, the same message in the first message set corresponds to at least one second processing mode.

In some embodiments, in a case where the same message in the first message set corresponds to a plurality of first processing modes, the first-type system message indicates the first processing mode adopted for the same message in the first message set. In a case where the same message in the first message set corresponds to a plurality of second processing modes, the first-type system message indicates the second processing mode adopted for the same message in the first message set. In this way, different processing modes may be used for different second nodes or scenarios, thereby improving message processing efficiency.

For example, considering the PDCCH as an example, in a case where the first message set has two types of PDCCHs respectively corresponding to terminals of two different service types, the first type of PDCCH adopts the first processing mode, and the second type of PDCCH adopts the second processing mode. Of course, processing modes adopted for other messages in the first message set may also be determined with reference to the execution process of this example.

For another example, considering the PDCCH as an example, in a case where the first message set has three types of PDCCHs respectively corresponding to terminals of three different service types, the first type of PDCCH adopts the first processing mode, the second type of PDCCH adopts a first type of second processing mode, and the third type of PDCCH adopts a second type of second processing mode. In a case where the MIB adopts the second processing mode, the MIB indicates the types of the second processing modes adopted for the second type of PDCCH and the third type of PDCCH. Of course, processing modes adopted for other messages in the first message set may also be determined with reference to the execution process of this example.

In some embodiments, in a case where there are a plurality of first-type system messages, a first-type system message corresponds to a first message set. A processing mode of a message in a first message set is determined according to a first-type system message.

In some embodiments, the processing mode of the message in the first message set being determined according to the first-type system message includes that: the processing mode of the message in the first message set is the same as a processing mode of the first-type system message; alternatively, the processing mode of the message in the first message set is indicated by the first-type system message.

In some embodiments, in a case where the plurality of first-type system messages correspond to the same first message set, a processing mode of the first message set is determined according to the latest first-type system message. The latest first-type system message is the one closest to the first message set.

In some embodiments, in a case where there is at least one same message in a plurality of first message sets corresponding to the plurality of first-type system messages, a processing mode of the at least one same message is determined according to the latest first-type system message. The latest first-type system message is the one closest to the first message set.

In some embodiments, the processing mode of the first-type system message is determined according to a synchronization message. In this way, message processing efficiency is improved and resources may also be saved by determining the processing mode of the first-type system message according to the synchronization message.

In some embodiments, the processing mode of the first-type system message is the same as a processing mode of the synchronization message; alternatively, the processing mode of the first-type system message is indicated by the synchronization message. The synchronization message may further refer to synchronization signaling or a synchronization channel.

In some embodiments, information carried in the first-type system message includes at least one of: capability information, configuration information of subcarrier spacing, configuration information of a waveform, and configuration information of a reference signal.

It may be understood that a terminal having the capabilities described in the first-type system message may further determine the processing mode of the message in the first message set based on the first-type system message, thereby receiving the message in the first message set. The configuration information of subcarrier spacing, the configuration information of the waveform, and the configuration information of the reference signal may be used to determine the message in the first message set.

In some embodiments, a configurable range of at least one of the configuration information of subcarrier spacing, the configuration information of the waveform, and the configuration information of the reference signal is determined by at least one of:
being determined by the processing mode of the synchronization message;
being indicated by the synchronization message;
being determined by the processing mode of the first-type system message; and
being indicated by the first-type system message.

In some embodiments, the configurable range of the configuration information belongs to a configurable range of target configuration information. The configurable range of the target configuration information is determined by at least one of:
being determined by the processing mode of the synchronization message;
being indicated by the synchronization message;
being determined by the processing mode of the first-type system message; and
being indicated by the first-type system message.

For example, considering the subcarrier spacing as an example, it is assumed that a value of the subcarrier spacing may be 15 kHz, 30 kHz, 60 kHz, 120 kHz, or 240 kHz. First, target configuration information of the subcarrier spacing is determined. For example, the target configuration information of the subcarrier spacing is a set of 15 kHz and 30 kHz (i.e., {15 kHz, 30 kHz}). Correspondingly, a configurable range of the target configuration information of the subcarrier spacing is the set of 15 kHz and 30 kHz (i.e., {15 kHz, 30 kHz}). Then the first-type system message (e.g., the MIB) may indicate that the subcarrier spacing is selected as 15 kHz or 30 kHz.

For example, in a case where the reference signal is the DMRS, the number of the DMRSs configured in a time-domain or frequency-domain resource block is configurable. For example, the DMRS adopts uniform distribution. That is to say, in the frequency domain, X1 (X1 being an integer greater than or equal to 1) resource elements (REs) out of every X (X being an integer greater than or equal to 1) REs are used for transmitting the DMRS; in the time domain, Y1 (Y1 being an integer greater than or equal to 1) time-domain symbols out of every Y (Y being an integer greater than or equal to 1) time-domain symbols are configured with the DMRS. The resource element (RE) also referred to as a resource element or resource particle, and occupies a time-domain symbol in the time domain and a subcarrier in the frequency domain.

In this example, values of elements in a set of X, X1, Y, and Y1 (i.e., {X, X1, Y, Y1}) are configured to forms a DMRS resource configuration scheme. Considering that X, X1, Y, and Y1 have a plurality of possible values, there are a plurality of DMRS resource configuration schemes. In this embodiment, eight DMRS resource configuration schemes are determined based on the processing mode of the MIB, that is, a configurable range of second configuration information of the DMRS is the eight DMRS resource configuration schemes. Then, in this embodiment, first configuration information of the DMRS in the MIB indicates the DMRS scheme selected from the eight DMRS resource configuration schemes.

For another example, in a case where the reference signal is the DMRS, the number of the DMRSs configured in a time-domain or frequency-domain resource block is configurable. For example, the DMRS adopts uniform distribution. That is to say, in the frequency domain, X1 (X1 being an integer greater than or equal to 1) REs out of every X (X being an integer greater than or equal to 1) REs are used for transmitting the DMRS; in the time domain, Y1 (Y1 being an integer greater than or equal to 1) time-domain symbols out of every Y (Y being an integer greater than or equal to 1) time-domain symbols are configured with the DMRS. The resource element (RE) also referred to as a resource element or resource particle, and occupies a time-domain symbol in the time domain and a subcarrier in the frequency domain. In addition, the DMRS may further adopt non-uniform distribution, and a configuration mode of the DMRS in a time-domain or frequency-domain resource block may adopt a predefined configuration or be indicated by signaling.

In this example, eight DMRS resource configuration schemes are determined based on the processing mode of the MIB, that is, a configurable range of second configuration information of the DMRS is the eight DMRS resource configuration schemes. Then, in this embodiment, first configuration information of the DMRS in the MIB indicates the DMRS scheme selected from the eight DMRS resource configuration schemes.

In some embodiments, a processing mode of a message in a second message set is determined according to the second-type system message. The second message set includes at least one of:
at least one second-type system message other than the second-type system message;
a message carrying scheduling information of at least one second-type system message other than the second-type system message;
a control channel;
a downlink channel;
an uplink channel; and
a message related to a random access procedure.

The scheduling information of at least one second-type system message other than the second-type system message includes at least: resource configuration information of the second-type system message. The scheduling information is carried on the physical downlink control channel. The message carrying scheduling information of at least one second-type system message other than the second-type system message may further refer to signaling or a channel carrying scheduling information of at least one second-type system message other than the second-type system message. The message related to the random access procedure may further refer to signaling or a channel related to the random access procedure.

The control channel includes the physical downlink control channel.

The downlink channel includes the physical downlink shared channel. The downlink channel may further have other names, such as the downlink data transmission channel.

The uplink channel includes the physical uplink shared channel. The uplink channel may further have other names, such as the uplink data transmission channel.

The random access procedure includes transmission or reception of a plurality of messages between the first node and the second node. These messages include at least one of the following functions:
achieving uplink synchronization between the first node and the second node;
achieving a transition from the RRC idle state to the RRC connected state;
mobility management of the second node in the RRC connected state, such as achieving uplink synchronization with the neighbor cell during handover;
in response to the first node detecting that the second node is out of synchronization in the uplink, achieving uplink resynchronization by triggering the second node through the downlink command;
in response to the second node detecting downlink synchronization failure, achieving resynchronization through uplink random access;
in response to the number of untimely scheduling events of the second node in the connected state exceeding a certain threshold, initiating random access to compete for resources;
acquiring system information; and
synchronization recovery after beam failure.

In some embodiments, the processing mode of the message in the second message set being determined according to the second-type system message includes that: the processing mode of the message in the second message set is the same as a processing mode of the second-type system message; alternatively, the processing mode of the message in the second message set is indicated by the second-type system message.

In some embodiments, the same message in the second message set corresponds to at least one processing mode.

In some embodiments, the same message in the second message set corresponds to at least one first processing mode; and/or, the same message in the second message set corresponds to at least one second processing mode.

In some embodiments, in a case where the same message in the second message set corresponds to a plurality of first processing modes, the second-type system message indicates the first processing mode adopted for the same message in the second message set. In a case where the same message in the second message set corresponds to a plurality of second processing modes, the second-type system message indicates the second processing mode adopted for the same message in the second message set. In this way, different processing modes may be used for different second nodes or scenarios, thereby improving message processing efficiency.

For example, considering the PDCCH as an example, in a case where the second message set has two types of PDCCHs respectively corresponding to terminals of two different service types, the first type of PDCCH adopts the first processing mode, and the second type of PDCCH adopts the second processing mode. Of course, processing modes adopted for other messages in the second message set may also be determined with reference to the execution process of this example.

For another example, considering the PDCCH as an example, in a case where the second message set has three types of PDCCHs respectively corresponding to terminals of three different service types, the first type of PDCCH adopts the first processing mode, the second type of PDCCH adopts a first type of second processing mode, and the third type of PDCCH adopts a second type of second processing mode. In a case where the SIB adopts the second processing mode, the SIB indicates the types of the second processing modes adopted for the second type of PDCCH and the third type of PDCCH. Of course, processing modes adopted for other messages in the second message set may also be determined with reference to the execution process of this example.

In some embodiments, in a case where there are a plurality of second-type system messages, a second-type system message corresponds to a second message set. A processing mode of a message in a second message set is determined according to a second-type system message.

In some embodiments, the processing mode of the message in the second message set being determined according to the second-type system message includes that: the processing mode of the message in the second message set is the same as the processing mode of the second-type system message; alternatively, the processing mode of the message in the second message set is indicated by the second-type system message.

In some embodiments, in a case where the plurality of second-type system messages correspond to the same second message set, a processing mode of the second message set is determined according to the latest second-type system message.

In some embodiments, the processing mode of the second message set being determined according to the latest second-type system message includes that: the processing mode of the second message set is the same as a processing mode of the latest second-type system message; alternatively, the processing mode of the second message set is indicated by the latest second-type system message.

In some embodiments, in a case where there is at least one same message in a plurality of second message sets corresponding to the plurality of second-type system messages, a processing mode of the at least one same message is determined according to the latest second-type system message. The latest second-type system message is the one closest to the second message set.

In some embodiments, the processing mode of the at least one same message being determined according to the latest second-type system message includes that: the processing mode of the at least one same message is the same as the processing mode of the latest second-type system message; alternatively, the processing mode of the at least one same message is indicated by the latest second-type system message.

In some embodiments, the processing mode of the second-type system message is determined according to the synchronization message or the first-type system message. The synchronization message may further refer to synchronization signaling or a synchronization channel. In this way, message processing efficiency is improved and resources may also be saved by determining the processing mode of the second-type system message according to the synchronization message or the first-type system message.

In some embodiments, the processing mode of the second-type system message is the same as the processing mode of the synchronization message or the first-type system message; alternatively, the processing mode of the first-type system message is indicated by the synchronization message or the first-type system message.

In some embodiments, information carried in the second-type system message includes at least one of: capability information, configuration information of subcarrier spacing, configuration information of a waveform, and configuration information of a reference signal.

In some embodiments, a configurable range of at least one of the configuration information of subcarrier spacing, the configuration information of the waveform, and configuration information of the reference signal is determined by at least one of:
being determined by the processing mode of the synchronization message;
being indicated by the synchronization message;
being determined by the processing mode of the first-type system message; and
being indicated by the first-type system message.

On this basis, the system message transmission strategy is improved, the requirements of different terminals and application scenarios are met, which may help dynamically adjust the system message transmission mode to adapt to different scenarios, thereby enhancing system compatibility and flexibility, improving system spectrum utilization efficiency and reducing resource overhead.

The solutions in the embodiments of the present disclosure are mainly described above from the perspective of methods. A system message sending device and a system message receiving device are also described below. The system message sending device is configured to perform the system message sending method in any of the embodiments described above and their possible implementations, and the system message receiving device is configured to perform the system message receiving method in any of the embodiments described above and their possible implementations.

It may be understood that, in order to implement the system message sending method and the system message receiving method, the system message sending device and the system message receiving device each include corresponding hardware structures and/or corresponding software modules for performing a variety of functions. Those skilled in the art will easily realize that the present disclosure may be implemented in the form of hardware or a combination of hardware and computer software, with reference to the algorithm steps of the examples described in the embodiments of the present disclosure. Whether a function is performed by hardware or computer software-driven hardware depends on the specific applications and design constraints of the technical solutions. Professional technicians may use different methods to implement the described functions for each specific application, but such implementation will not be considered beyond the scope of the present disclosure.

In the embodiments of the present disclosure, the system message sending device and the system message receiving device each may be divided into functional modules according to the method embodiments described above. For example, each function module may be divided corresponding to each functional, or two or more functions may be integrated into one functional module. The integrated modules described above may be implemented in the form of hardware or software. It will be noted that the division of modules in the embodiments of the present disclosure is schematic, and is merely a kind of logical function division, and there may be other division manners in actual implementation. The description is given below by considering an example in which each functional module is divided corresponding to each function.

FIG. 7 is a system message sending device provided in the embodiments of the present disclosure, and the system message sending device is applied to the first node. The system message sending device 700 includes: a processing module 701 and a communication module 702.

The processing module 701 is configured to generate at least one system message.

The communication module 702 is configured to send at least one system message. A processing mode adopted for the system message includes at least one of a first processing mode and a second processing mode. The system message includes at least one of a first-type system message and a second-type system message.

In some embodiments, the first processing mode is a configurable processing mode, and the second processing mode is a processing mode determined by at least one of the first node and the second node.

In some embodiments, the processing mode includes at least one of: a message generation mode, a message sending mode, a message receiving mode, a format of information carried in a message, content of information carried in a message, and a transmission configuration.

In some embodiments, a processing mode of a message in a first message set is determined according to the first-type system message. The first message set includes at least one of: the second-type system message, a message carrying scheduling information of the second-type system message, a control channel, a downlink channel, an uplink channel, and a message related to a random access procedure.

In some embodiments, the processing mode of the message in the first message set being determined according to the first-type system message includes that: the processing mode of the message in the first message set is the same as a processing mode of the first-type system message; alternatively, the processing mode of the message in the first message set is indicated by the first-type system message.

In some embodiments, the same message in the first message set corresponds to at least one processing mode.

In some embodiments, the same message in the first message set corresponds to at least one first processing mode; and/or, the same message in the first message set corresponds to at least one second processing mode.

In some embodiments, in a case where the same message in the first message set corresponds to a plurality of first processing modes, the first-type system message indicates the first processing mode adopted for the same message in the first message set. In a case where the same message in the first message set corresponds to a plurality of second processing modes, the first-type system message indicates the second processing mode adopted for the same message in the first message set.

In some embodiments, in a case where there are a plurality of first-type system messages, a first-type system message corresponds to a first message set. A processing mode of a message in a first message set is determined according to a first-type system message.

In some embodiments, the processing mode of the message in the first message set being determined according to the first-type system message includes that: the processing mode of the message in the first message set is the same as the processing mode of the first-type system message; alternatively, the processing mode of the message in the first message set is indicated by the first-type system message.

In some embodiments, in a case where the plurality of first-type system messages correspond to the same first message set, a processing mode of the first message set is determined according to the latest first-type system message.

In some embodiments, in a case where there is at least one same message in a plurality of first message sets corresponding to the plurality of first-type system messages, a processing mode of the at least one same message is determined according to the latest first-type system message.

In some embodiments, the processing mode of the first-type system message is determined according to a synchronization message.

In some embodiments, the processing mode of the first-type system message is the same as a processing mode of the synchronization message; alternatively, the processing mode of the first-type system message is indicated by the synchronization message.

In some embodiments, information carried in the first-type system message includes at least one of: capability information, configuration information of subcarrier spacing, configuration information of a waveform, and configuration information of a reference signal.

In some embodiments, a configurable range of at least one of the configuration information of subcarrier spacing, the configuration information of the waveform, and the configuration information of the reference signal is determined by at least one of: being determined by the processing mode of the synchronization message; being indicated by the synchronization message; being determined by the processing mode of the first-type system message; and being indicated by the first-type system message.

In some embodiments, a processing mode of a message in a second message set is determined according to the second-type system message. The second message set includes at least one of: at least one second-type system message other than the second-type system message, a message carrying scheduling information of at least one second-type system message other than the second-type system message, a control channel, a downlink channel, an uplink channel, and a message related to a random access procedure.

In some embodiments, the processing mode of the message in the second message set being determined according to the second-type system message includes that: the processing mode of the message in the second message set is the same as a processing mode of the second-type system message; alternatively, the processing mode of the message in the second message set is indicated by the second-type system message.

In some embodiments, the same message in the second message set corresponds to at least one processing mode.

In some embodiments, the same message in the second message set corresponds to at least one first processing mode; and/or, the same message in the second message set corresponds to at least one second processing mode.

In some embodiments, in a case where the same message in the second message set corresponds to a plurality of first processing modes, the second-type system message indicates the first processing mode adopted for the same message in the second message set. In a case where the same message in the second message set corresponds to a plurality of second processing modes, the second-type system message indicates the second processing mode adopted for the same message in the second message set.

In some embodiments, in a case where there are a plurality of second-type system messages, a second-type system message corresponds to a second message set. A processing mode of a message in a second message set is determined according to a second-type system message.

In some embodiments, the processing mode of the message in the second message set being determined according to the second-type system message includes that: the processing mode of the message in the second message set is the same as the processing mode of the second-type system message; alternatively, the processing mode of the message in the second message set is indicated by the second-type system message.

In some embodiments, in a case where the plurality of second-type system messages correspond to the same second message set, a processing mode of the second message set is determined according to the latest second-type system message.

In some embodiments, the processing mode of the second message set being determined according to the latest second-type system message includes that: the processing mode of the second message set is the same as a processing mode of the latest second-type system message; alternatively, the processing mode of the second message set is indicated by the latest second-type system message.

In some embodiments, in a case where there is at least one same message in a plurality of second message sets corresponding to the plurality of second-type system messages, a processing mode of the at least one same message is determined according to the latest second-type system message.

In some embodiments, the processing mode of the at least one same message being determined according to the latest second-type system message includes that: the processing mode of the at least one same message is the same as a processing mode of the latest second-type system message; alternatively, the processing mode of the at least one same message is indicated by the latest second-type system message.

In some embodiments, the processing mode of the second-type system message is determined according to the synchronization message or the first-type system message.

In some embodiments, the processing mode of the second-type system message is the same as the processing mode of the synchronization message or the first-type system message; alternatively, the processing mode of the first-type system message is indicated by the synchronization message or the first-type system message.

In some embodiments, information carried in the second-type system message includes at least one of: capability information, first configuration information of subcarrier spacing, first configuration information of a waveform, and first configuration information of a reference signal.

In some embodiments, a configurable range of at least one of the configuration information of subcarrier spacing, the configuration information of the waveform, and the configuration information of the reference signal is determined by at least one of: being determined by the processing mode of the synchronization message; being indicated by the synchronization message; being determined by the processing mode of the first-type system message; and being indicated by the first-type system message.

FIG. 8 is a system message receiving device provided in the embodiments of the present disclosure, and the system message receiving device is applied to the second node. The system message receiving device 800 includes: a communication module 801 and a processing module 802.

The communication module 801 is configured to receive at least one system message. A processing mode adopted for the system message includes at least one of a first processing mode and a second processing mode. The system message includes at least one of a first-type system message and a second-type system message.

The processing module 802 is configured to parse the at least one system message.

In some embodiments, the first processing mode is a configurable processing mode, and the second processing mode is a processing mode determined by at least one of the first node and the second node.

In some embodiments, the processing mode includes at least one of: a message generation mode, a message sending mode, a message receiving mode, a format of information carried in a message, content of information carried in a message, and a transmission configuration.

In some embodiments, a processing mode of a message in a first message set is determined according to the first-type system message. The first message set includes at least one of: the second-type system message, a message carrying scheduling information of the second-type system message, a control channel, a downlink channel, an uplink channel, and a message related to a random access procedure.

In some embodiments, information carried in the first-type system message includes at least one of: capability information, first configuration information of subcarrier spacing, first configuration information of a waveform, and first configuration information of a reference signal.

In some embodiments, a processing mode of a message in a second message set is determined according to the second-type system message. The second message set includes at least one of: at least one second-type system message other than the second-type system message, a message/signaling/channel carrying scheduling information of at least one second-type system message other than the second-type system message, a control channel, a downlink channel, an uplink channel, and a message related to a random access procedure.

In some embodiments, information carried in the second-type system message includes at least one of: capability information, first configuration information of subcarrier spacing, first configuration information of a waveform, and first configuration information of a reference signal.

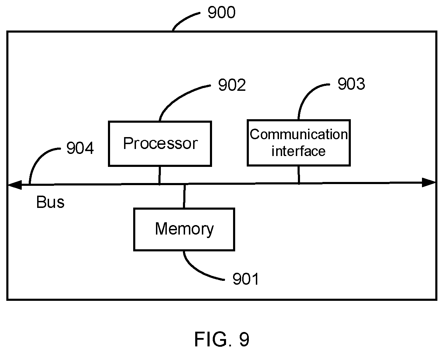

In a case where the functions of the integrated modules described above are implemented in the form of hardware, a possible structure of a communication device is further provided in the embodiments of the present disclosure, and the communication device is configured to perform the system message sending method and the system message receiving method provided in the embodiments of the present disclosure. As shown in FIG. 9, the communication device 900 includes: a communication interface 903, a processor 902, and a bus 904. Optionally, the communication device may further include a memory 901.

The processor 902 may implement or execute a variety of exemplary logic blocks, modules, and circuits described with reference to the embodiments of the present disclosure. The processor 902 may be a central processing unit, a general-purpose processor, a digital signal processor, an application specific integrated circuit, a field programmable gate array or any other programmable logic device, a transistor logic device, a hardware component, or any combination thereof. The processor 902 may implement or execute a variety of exemplary logic blocks, modules, and circuits described with reference to the embodiments of the present disclosure. The processor 902 may also be a combination for implementing computing functions, for example, a combination of one or more microprocessors, or a combination of a digital signal processor (DSP) and a microprocessor.

The communication interface 903 is configured to connect to other devices through a communication network. The communication network may be an Ethernet, a radio access network, a wireless local area network (WLAN), or the like.

The memory 901 may be, but is not limited to, a read-only memory (ROM) or other types of static storage devices capable of storing static information and instructions, a random access memory (RAM) or other types of dynamic storage devices capable of storing information and instructions, or an electrically erasable programmable read-only memory (EEPROM), a magnetic disk storage medium or other magnetic storage device, or any other medium capable of being used to carry or store desired program codes and capable of being accessed by a computer, where the desired program codes have instructions or are in the form of data structure.

As a possible implementation, the memory 901 may exist independently of the processor 902. The memory 901 may be connected to the processor 902 through the bus 904 and used for storing instructions or program codes. When invoking and executing the instructions or program codes stored in the memory 901, the processor 902 may perform the system message sending method and the system message receiving method provided in the embodiments of the present disclosure.

In another possible implementation, the memory 901 may also be integrated with the processor 902.

The bus 904 may be an extended industry standard architecture (EISA) bus. The bus 904 may be classified as an address bus, a data bus, a control bus, etc. For ease of representation, only one bold line is used in FIG. 9, but it does not mean that there is only one bus or one type of bus.

A computer-readable storage medium (e.g., a non-transitory computer-readable storage medium) is provided in some embodiments of the present disclosure. The computer-readable storage medium has stored computer program instructions. When the computer program instructions are run on a computer, the computer is enabled to perform the system message sending method and the system message receiving method as described in any one of the embodiments described above.

In an exemplary implementation, the computer may be the communication device, and the present disclosure does not limit the specific form of the computer.

In some examples, the computer-readable storage medium may include, but is not limited to: a magnetic storage device (e.g., a hard disk, a floppy disk, or a magnetic tape), an optical disk (e.g., a compact disk (CD), a digital versatile disk (DVD)), a smart card, and a flash memory device (e.g., an erasable programmable read-only memory (EPROM), a card, a stick, or a key drive). The computer-readable storage media described in the present disclosure may represent one or more devices and/or other machine-readable storage media for storing information. The term "machine-readable storage medium" may include, but is not limited to, wireless channels and a variety of other media capable of storing, containing, and/or carrying instructions and/or data.

A computer program product including instructions is provided in the embodiments of the present disclosure. When the computer program product is run on a computer, the computer is enabled to perform the system message sending method and the system message receiving method as described in any one of the embodiments described above.

The above are merely specific implementations of the present disclosure, but the protection scope of the present disclosure is not limited thereto. Any variations or replacements within the technical scope disclosed in the present disclosure will fall within the protection scope of the present disclosure. Therefore, the protection scope of the present disclosure will be subject to the protection scope of the claims.

## Claims

1. A system message sending method, applied to a first node, the method comprising:
sending at least one system message; wherein a processing mode adopted for the system message includes at least one of a first processing mode and a second processing mode; the system message includes at least one of a first-type system message and a second-type system message.

2. The method according to claim 1, wherein the first processing mode is a configurable processing mode; the second processing mode is a processing mode determined by at least one of the first node and a second node.

3. The method according to claim 1 or 2, wherein the processing mode includes at least one of: a message generation mode, a message sending mode, a message receiving mode, a format of information carried in a message, content of information carried in a message, and a transmission configuration.

4. The method according to claim 1, wherein a processing mode of a message in a first message set is determined according to the first-type system message;
wherein the first message set includes at least one of:
the second-type system message;
a message carrying scheduling information of the second-type system message;
a control channel;
a downlink channel;
an uplink channel; and
a message related to a random access procedure.

5. The method according to claim 4, wherein the processing mode of the message in the first message set being determined according to the first-type system message, includes that: the processing mode of the message in the first message set is the same as a processing mode of the first-type system message; or
the processing mode of the message in the first message set is indicated by the first-type system message.

6. The method according to claim 4, wherein a same message in the first message set corresponds to at least one processing mode.

7. The method according to claim 6, wherein the same message in the first message set corresponds to at least one first processing mode; and/or
the same message in the first message set corresponds to at least one second processing mode.

8. The method according to claim 7, wherein in response to the same message in the first message set corresponding to a plurality of first processing modes, the first-type system message indicates the first processing mode adopted for the same message in the first message set; and
in response to the same message in the first message set corresponding to a plurality of second processing modes, the first-type system message indicates the second processing mode adopted for the same message in the first message set.

9. The method according to claim 4, wherein in response to presence of a plurality of first-type system messages, a first-type system message corresponds to a first message set; the processing mode of the message in the first message set is determined according to the first-type system message.

10. The method according to claim 9, wherein the processing mode of the message in the first message set being determined according to the first-type system message, includes that: the processing mode of the message in the first message set is the same as a processing mode of the first-type system message; or
the processing mode of the message in the first message set is indicated by the first-type system message.

11. The method according to claim 9, wherein in response to the plurality of first-type system messages corresponding to a same first message set, a processing mode of the first message set is determined according to a latest first-type system message.

12. The method according to claim 9, wherein in response to presence of at least one same message in a plurality of first message sets corresponding to the plurality of first-type system messages, a processing mode of the at least one same message is determined according to a latest first-type system message.

13. The method according to claim 1, wherein a processing mode of the first-type system message is determined according to a synchronization message.

14. The method according to claim 13, wherein the processing mode of the first-type system message is the same as a processing mode of the synchronization message; or
the processing mode of the first-type system message is indicated by the synchronization message.

15. The method according to claim 1, wherein information carried in the first-type system message includes at least one of: capability information, configuration information of subcarrier spacing, configuration information of a waveform, and configuration information of a reference signal.

16. The method according to claim 15, wherein a configurable range of at least one of the configuration information of subcarrier spacing, the configuration information of the waveform, and the configuration information of the reference signal is determined by at least one of:
being determined by a processing mode of a synchronization message;
being indicated by the synchronization message;
being determined by a processing mode of the first-type system message; and
being indicated by the first-type system message.

17. The method according to claim 1, wherein a processing mode of a message in a second message set is determined according to the second-type system message;
wherein the second message set includes at least one of:
at least one second-type system message other than the second-type system message;
a message carrying scheduling information of the at least one second-type system message other than the second-type system message;
a control channel;
a downlink channel;
an uplink channel; and
a message related to a random access procedure.

18. The method according to claim 17, wherein the processing mode of the message in the second message set being determined according to the second-type system message, includes that: the processing mode of the message in the second message set is the same as a processing mode of the second-type system message; or
the processing mode of the message in the second message set is indicated by the second-type system message.

19. The method according to claim 17, wherein a same message in the second message set corresponds to at least one processing mode.

20. The method according to claim 19, wherein the same message in the second message set corresponds to at least one first processing mode; and/or
the same message in the second message set corresponds to at least one second processing mode.

21. The method according to claim 20, wherein in response to the same message in the second message set corresponding to a plurality of first processing modes, the second-type system message indicates the first processing mode adopted for the same message in the second message set; and
in response to the same message in the second message set corresponding to a plurality of second processing modes, the second-type system message indicates the second processing mode adopted for the same message in the second message set.

22. The method according to claim 17, wherein in response to presence of a plurality of second-type system messages, a second-type system message corresponds to a second message set; the processing mode of the message in the second message set is determined according to the second-type system message.

23. The method according to claim 22, wherein the processing mode of the message in the second message set being determined according to the second-type system message, includes that: the processing mode of the message in the second message set is the same as a processing mode of the second-type system message; or
the processing mode of the message in the second message set is indicated by the second-type system message.

24. The method according to claim 22, wherein in response to the plurality of second-type system messages corresponding to a same second message set, a processing mode of the second message set is determined according to a latest second-type system message.

25. The method according to claim 24, wherein the processing mode of the second message set being determined according to the latest second-type system message, includes that: the processing mode of the second message set is the same as a processing mode of the latest second-type system message; or
the processing mode of the second message set is indicated by the latest second-type system message.

26. The method according to claim 22, wherein in response to presence of at least one same message in a plurality of second message sets corresponding to the plurality of second-type system messages, a processing mode of the at least one same message is determined according to a latest second-type system message.

27. The method according to claim 26, wherein the processing mode of the at least one same message being determined according to the latest second-type system message, includes that: the processing mode of the at least one same message is the same as a processing mode of the latest second-type system message; or
the processing mode of the at least one same message is indicated by the latest second-type system message.

28. The method according to claim 17, wherein a processing mode of the second-type system message is determined according to a synchronization message or the first-type system message.

29. The method according to claim 28, wherein the processing mode of the second-type system message is the same as a processing mode of the synchronization message or a processing mode of the first-type system message; or
the processing mode of the first-type system message is indicated by the synchronization message or the first-type system message.

30. The method according to claim 17, wherein information carried in the second-type system message includes at least one of: capability information, configuration information of subcarrier spacing, configuration information of a waveform, and configuration information of a reference signal.

31. The method according to claim 30, wherein a configurable range of at least one of the configuration information of subcarrier spacing, the configuration information of the waveform, and the configuration information of the reference signal is determined by at least one of:
being determined by a processing mode of a synchronization message;
being indicated by the synchronization message;
being determined by a processing mode of the first-type system message; and
being indicated by the first-type system message.

32. A system message receiving method, applied to a second node, the method comprising:
receiving at least one system message; wherein a processing mode adopted for the system message includes at least one of a first processing mode and a second processing mode; the system message includes at least one of a first-type system message and a second-type system message.

33. The method according to claim 32, wherein the first processing mode is a configurable processing mode; the second processing mode is a processing mode determined by at least one of a first node and the second node.

34. The method according to claim 32 or 33, wherein the processing mode includes at least one of: a message generation mode, a message sending mode, a message receiving mode, a format of information carried in a message, content of information carried in a message, and a transmission configuration.

35. The method according to claim 32, wherein a processing mode of a message in a first message set is determined according to the first-type system message;
wherein the first message set includes at least one of:
the second-type system message;
a channel carrying the second-type system message;
a control channel;
a downlink channel;
an uplink channel; and
a message related to a random access procedure.

36. The method according to claim 32, wherein information carried in the first-type system message includes at least one of: capability information, configuration information of subcarrier spacing, configuration information of a waveform, and configuration information of a reference signal.

37. The method according to claim 32, wherein a processing mode of a message in a second message set is determined according to the second-type system message;
wherein the second message set includes at least one of:
at least one second-type system message other than the second-type system message;
a message, signaling, or channel carrying scheduling information of the at least one second-type system message other than the second-type system message;
a control channel;
a downlink channel;
an uplink channel; and
a message related to a random access procedure.

38. The method according to claim 37, wherein information carried in the second-type system message includes at least one of: capability information, configuration information of subcarrier spacing, configuration information of a waveform, and configuration information of a reference signal.

39. A communication device, comprising: a memory and a processor; wherein the memory is coupled to the processor; the memory is configured to store instructions executable by the processor; the processor, upon executing the instructions, performs the method according to any one of claims 1 to 38.

40. A computer-readable storage medium, having stored computer instructions that, when run on a communication device, enable the communication device to perform the method according to any one of claims 1 to 38.
